# EUROPÄISCHE PATENTSCHRIFT

(11) **EP 0 991 872 B1**
(45) Veröffentlichungstag und Bekanntmachung des Hinweises auf die Patenterteilung: **11.06.2003**
(21) Anmeldenummer: 98938640.4
(22) Anmeldetag: 24.06.1998
(51) Int. Cl.: F16D 1/08, B23B 31/30

(54) **SPANNVORRICHTUNG**
FASTENING DEVICE
DISPOSITIF DE SERRAGE

(30) Priorität: 26.06.1997 DE 29711184 U
(43) Veröffentlichungstag der Anmeldung: 12.04.2000
(73) Patentinhaber: Leitz GmbH & Co. KG, 73447 Oberkochen (DE)
(72) Erfinder: STEIN, Dieter, D-73447 Oberkochen (DE); KISSELBACH, Andreas, D-73447 Oberkochen (DE)
(74) Vertreter: Patentanwälte Bartels und Partner
(86) Internationale Anmeldenummer: EP9803866
(87) Internationale Veröffentlichungsnummer: WO99000604

(56) Entgegenhaltungen:
- DE-U- 29 614 727
- FR-A- 2 418 055
- GB-A- 912 646
- GB-A- 2 111 172

## Beschreibung

Die Erfindung betrifft eine Spannvorrichtung zum Befestigen eines Werkzeugs auf einer Welle gemäß den Merkmalen des Oberbegriffes des Anspruches 1.

Derartige Spannvorrichtungen, die auch als Hydro-Spannelemente bezeichnet werden, zur Herstellung einer Verbindung zwischen einem bei Betrieb rotierenden Werkzeug, insbesondere für die Bearbeitung von Holz oder holzartigen Werkstoffen, und einer zylindrischen Antriebswelle sind bekannt. Bei einer bekannten Ausführungsform wird der Nabenkörper, an dem das Werkzeug befestigt ist, oder der einstückig Teil des Werkzeugs ist, auf einer zylindrischen Antriebswelle mechanisch derart festgelegt, daß das Drehmoment von der Welle auf das Werkzeug über den Nabenkörper übertragen werden kann.

Bei einer bekannten Spannvorrichtung nach der DE 1 913 481 ist ein elastisches Spannteil aus einer innenliegenden, der Welle zugewandten Spannwand gebildet, die mit einer starren Außenwand einen Aufnahmeraum für das hydraulische Medium begrenzt. In einem Steuerkanal eines Ringbundes der bekannten Spannvorrichtung ist ein einschraubbarer Steuerkolben angeordnet, der bei seiner Zustellbewegung den Druck des hydraulischen Mediums erhöht und mithin die Klemmkraft, die über die innere, elastisch nachgiebige Spannwand auf die Welle ausgeübt wird, um eine drehfeste, kraftschlüssige Klemmverbindung zu erreichen. Ein in der starren Außenwand der Spannvorrichtung angeordnetes Anzeigeteil wird über den Druck des hydraulischen Mediums entgegen der Kraft einer Feder beim Klemmvorgang ausgefahren und zeigt einer Bedienperson an, ob die Klemmkraft für eine drehsichere Klemmverbindung ausreicht. Ein weiteres kolbenartiges Einschraubteil im mit dem Aufnahmeraum verbundenen Steuerkanal dient dem Abschluß des in der Vorrichtung aufgenommenen hydraulischen Mediums gegenüber der Umgebung. Mit dieser bekannten Vorrichtung ist eine definierte Klemmkraft nur durch Überwachung des Anzeigeteils einstellbar und das Spannen eines Bearbeitungswerkzeuges über die starre Außenwand ist nicht möglich.

Durch die US-PS 5,237,895 ist es zwar bereits bekannt, zwei konzentrisch zueinander angeordnete Spannwände, die zwischen sich den Aufnahmeraum für das hydraulische Medium begrenzen, derart nach außen und innen zu verformen, daß zum einen die Spannvorrichtung auf der Welle festgelegt ist und zum anderen ein Werkzeug auf dem Außenumfang der äußeren Spannwand; allein die dahingehenden Klemmverbindungen lassen sich bezüglich der Klemmwirkung nicht definiert einstellen, weil die über das hydraulische Medium ausgeübte Klemmkraft sich gleichzeitig und gleichmäßig auf beide Spannteile verteilt. Es können nur zwei Zustände erreicht werden, so daß in drucklosem Zustand keine Spannwirkung und bei Druckbeaufschlagung eine Klemmwirkung sowohl nach außen als auch nach innen zustande kommt. Dahingehende Spannvorrichtungen sind auch unter dem Fachbegriff "Duo-Spannbüchsen" bekannt, wobei als Betätigungseinrichtung nur ein einschraubbarer Steuerkolben vorgesehen ist, der über das hydraulische Medium beide Spannteile in Form der Spannwände gleichzeitig ansteuert.

Durch die GB-A-2 111 172 ist eine Spannvorrichtung in der Art einer Duo-Spannbüchse bekannt, wobei die beiden Aufnahmeräume für das hydraulische Medium über einen Kanal fluidführend miteinander verbunden sind. Als Betätigungseinrichtung weist die bekannte Spannvorrichtung einen gegen einen Anschlag als Begrenzung verfahrbaren Steuerkolben auf, der das Ansteuerelement bildet, wobei der beim Betätigen ansteigende Fluiddruck beide Spannteile in Form der Spannwände, die den jeweiligen Aufnahmeraum begrenzen, im wesentlichen gleichzeitig verformt, um derart synchron miteinander die beiden Klemmverbindungen herzustellen. Wird durch das bekannte Ansteuerelement die Begrenzung in Form des Anschlages erreicht, wirkt auf beide Klemmverbindungen die maximale Klemmkraft, die über das Ansteuerelement der Betätigungseinrichtung gemeinschaftlich herstellbar und wieder lösbar ist. Ein gezieltes Herstellen und Lösen einer Klemmverbindung einmal nach innen und einmal nach außen wirkend ohne Druckanzeigemittel ist mit der bekannten Spannvorrichtung nicht möglich. Hierfür sind gemäß einer geänderten Ausführungsform der bekannten Spannvorrichtung die beiden Aufnahmeräume in einzelne Kammern unterteilt sowie voneinander getrennt und für jeden derart gebildeten Kammerraum ist ein Ansteuerelement einer Betätigungseinrichtung vorgesehen. Die dahingehende Lösung ist jedoch konstruktiv aufwendig sowie teuer in der Herstellung und die sinnfällige Bedienung ist entsprechend erschwert.

Ausgehend von diesem Stand der Technik liegt der Erfindung die Aufgabe zugrunde, eine Spannvorrichtung zu schaffen, die günstig in der Herstellung ist sowie eine einfache und sichere Bedienung erlaubt und mit der solche Klemmkräfte ausübbar sind, daß es zu definierten, funktionssicheren Klemmverbindungen kommt. Eine dahingehende Aufgabe löst eine Spannvorrichtung mit den Merkmalen des Anspruchs 1.

Gemäß dem kennzeichnenden Teil des Anspruches 1 wirkt die Betätigungseinrichtung mit einer Begrenzung derart zusammen, daß bis zum Erreichen einer vorgebbaren Klemmkraft zunächst die eine Klemmverbindung und anschließend die andere Klemmverbindung erreicht ist. Je nach Auslegung der Spannvorrichtung Kann entweder zuerst innen und dann außen oder umgekehrt über die jeweiligen Spannteile mit definierten Klemmkräften die jeweilige Klemmverbindung erreicht werden. Aufgrund der Begrenzung läßt sich über die Betätigungseinrichtung eine vorgebbare maximale Klemmkraft für eine erste sichere Klemmverbindung erreichen und dieser Klemmkraft überlagert zeitlich nachfolgend eine weitere Klemmkraft für eine zweite sichere Klemmverbindung über die Betätigungseinrichtung.

Die erfindungsgemäße Spannvorrichtung benötigt hierfür wenig Bauteile, die im übrigen konstruktiv einfach aufbauen, so daß die Spannvorrichtung günstig in der Herstellung ist. Aufgrund der definierten Abfolge an Klemmvorgängen mit vorgebbaren maximalen Klemmkräften über die Begrenzung ist darüber hinaus keine zusätzliche Anzeigeeinrichtung notwendig, um Auskunft über den Systemzustand der Spannvorrichtung zu geben. Dadurch, daß mit der erfindungsgemäßen Spannvorrichtung zuerst die Klemmwirkung entweder am Innenumfang oder am Außenumfang über die Spannteile einsetzt und anschließend am gegenüberliegenden Umfang, erlaubt das Absenken des Druckes des hydraulischen Mediums um einen bestimmten Betrag, daß beispielsweise die Werkzeuge gewechselt werden können, ohne daß die Spannvorrichtung selbst auf der Welle sich verschiebt oder gar abgenommen werden muß. Auch läßt sich derart ein Werkzeug über die Spannvorrichtung definiert spannen, beispielsweise in einer Einrichtstation, um dann anschließend mit der Welle einer Bearbeitungsmaschine für einen Bearbeitungsvorgang verbunden zu werden. Auf diese Art und Weise kann beispielsweise das Werkzeug in gespanntem Zustand nachbearbeitet, beispielsweise geschliffen werden, ohne daß es dabei von der Werkzeugaufnahme in Form der Spannvorrichtung entfernt werden muß.

Bei der erfindungsgemäßen Spannvorrichtung weist die Betätigungseinrichtung zwei Steuerkolben auf, die jeweils als Begrenzung gegen einen Anschlag verfahrbar sind und dabei den Fluiddruck des hydraulischen Mediums bis zur vorgebbaren, gegebenenfalls maximalen Klemmkraft erhöhen. Je nachdem, wie die Spannteile in ihrem Elastizitätsverhalten nun ausgelegt sind, läßt sich dann unabhängig von der eingenommenen Position der Steuerkolben wahllos ein Steuerkolben derart bis zum Anschlag zustellen, daß zunächst eine erste Klemmverbindung mit einer sicheren Klemmkraft zustande kommt. Durch Zustellen des anderen Steuerkolbens läßt sich dann derart eine Überlagerung der Klemmkraft über den Druck des hydraulischen Mediums erreichen, daß die andere zweite Klemmverbindung sicher zustande kommt, ohne daß die erste Klemmverbindung nachteilig beeinflußt ist. Dies hat zur Folge, daß die erfindungsgemäße Spannvorrichtung absolut bedienungssicher ist, da keine vorgegebene Reihenfolge bei der Betätigung im Gegensatz zu Spannvorrichtungen nach dem Stand der Technik eingehalten werden muß und es ferner keine vorgegebenen Zwischenstufen mehr mit reduzierten Klemmkräften gibt.

Weitere vorteilhafte Ausführungsformen der erfindungsgemäßen Spannvorrichtung sind Gegenstand der Unteransprüche.

Im folgenden wird die erfindungsgemäße Spannvorrichtung anhand der Zeichnung näher erläutert.
Es zeigen in prinzipieller und nicht maßstäblicher Darstellung die
- Fig.1: einen Längsschnitt durch eine erste Ausführungsform;
- Fig.2: einen Schnitt längs der Linie II - II in Fig.1;
- Fig.3: einen Längsschnitt durch eine zweite Ausführungsform;
- Fig.4: einen Längsschnitt durch eine dritte Ausführungsform mit aufgesetzten Werkzeugträgern.

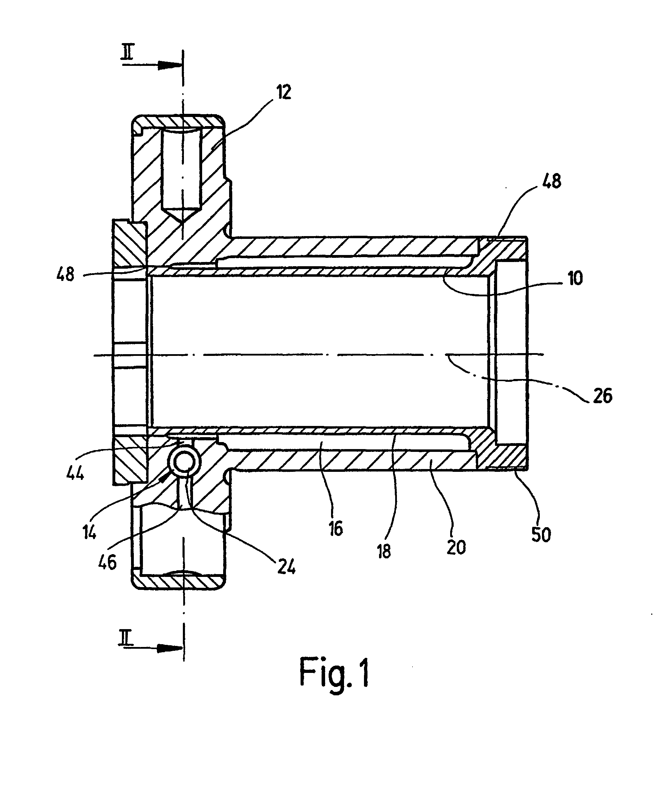

Fig.1 zeigt die Spannvorrichtung mit einer Aufnahmebohrung 10, über die die Spannvorrichtung auf eine nicht dargestellte Welle aufgeschoben werden kann. In Blickrichtung auf die Fig.1 gesehen weist die Spannvorrichtung auf ihrer linken Seite einen Ringbund 12 auf, der eine als Ganzes mit 14 bezeichnete Betätigungseinrichtung aufnimmt. Die Betätigungseinrichtung 14 wirkt auf ein hydraulisches Medium ein, insbesondere in Form einer Hydraulikflüssigkeit. Das hydraulische Medium füllt einen Aufnahmeraum 16 aus, der im wesentlichen von zwei Spannwänden 18 und 20 begrenzt ist. Die beiden Spannwände 18,20, die konzentrisch zueinander angeordnet sind, bilden jeweils ein Spannteil mit einem unterschiedlichen Elastizitäts- oder Ausdehnungsverhalten, wobei die innere Spannwand 18 die mögliche Klemmverbindung mit der nicht dargestellten Welle herstellt und die äußere Spannwand 20 ist für eine Klemmverbindung mit einem nicht dargestellten Werkzeug, insbesondere in Form eines Holzfräsers od.dgl. vorgesehen. Zwischen der Welle und der Spannvorrichtung sowie zwischen dieser und dem Werkzeug kommt also jeweils eine Klemmverbindung infolge einer elastischen Verformung der Spannwände 18,20 unter der Klemmkraft ausgeübt durch den Druck des hydraulischen Mediums zustande, wobei der Systemdruck des hydraulischen Mediums von der Betätigungseinrichtung 14 beeinflußt ist.

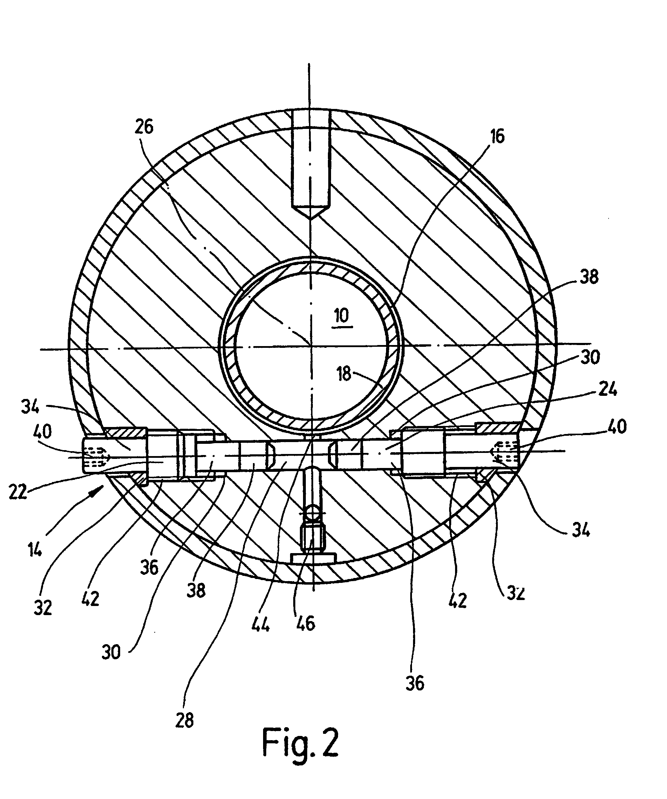

Wie insbesondere die Fig.2 zeigt, weist die Betätigungseinrichtung 14 zwei Ansteuerelemente in Form zweier Steuerkolben 22,24 auf, die getrennt voneinander betätigbar die Klemmverbindungen herstellen. Die in dem Ringbund 12 angeordneten Steuerkolben 22,24 verlaufen in ihrer Wirkrichtung quer zur Längsachse 26 der Spannvorrichtung in einem gemeinsamen Steuerkanal 28, der in den Aufnahmeraum 16 mündet und ansonsten sehnenartig in Blickrichtung auf die Fig.2 gesehen die untere Hälfte der Spannvorrichtung und in die Umgebung mündend durchgreift. Die Steuerkolben 22,24 sind innerhalb des gemeinsamen Steuerkanals 28 bis zum jeweiligen Anschlag 30 und 32 einschraubbar bzw. ausschraubbar.

Der jeweilige Steuerkolben 22,24 ist mehrteilig ausgebildet mit einem Einschraubteil 34, einem Zwischenteil 36 und einem Abdichtteil 38. Das jeweilige Einschraubteil 34 weist an seinem zur Umgebung zugewandten Ende eine Eingriffsstelle 40 für den Eingriff eines Betätigungswerkzeuges, beispielsweise in Form eines Innensechskantschlüssels od.dgl., auf. Die dahingehende Eingriffsstelle 40 ist in einer Ringhülse drehbar geführt, die beim Herausdrehen den einen Anschlag 32 für den jeweiligen Steuerkolben 22,24 bildet. Zwischen den beiden Anschlägen 30,32 im Steuerkanal 28 verläuft innerhalb des Ringbundes 12 ein Innengewinde 42, in das das jeweilige Einschraubteil 34 mit einem entsprechenden Außengewinde eingreift, welches an einer absatzartigen Verbreiterung des Einschraubteiles 40 angeordnet ist. An diese absatzartige Verbreiterung schließt sich in Richtung des Abdichtteils 38 das Zwischenteil 36 an, das zylindrisch ausgebildet weder mit dem Einschraubteil 34 noch mit dem Abdichtteil 38 fest verbunden ist. Auf diese Art und Weise wird die drehende Bewegung beim Ein- oder Ausschrauben des Einschraubteils 34 weder auf das Zwischenteil 36 noch auf das Abdichtteil 38 übertragen, sondern vielmehr nur eine axiale Bewegung in Längsrichtung des Steuerkanals 28. Das Abdichtteil 38 ist aus einem Dichtmaterial, vorzugsweise aus einem Elastomer-Material, gebildet und dichtet den Aufnahmeraum 16 über den zugeordneten Teil des Steuerkanals 28 gegenüber der Umgebung ab.

Der vorbeschriebene Aufbau mit den beiden Steuerkolben 22,24 und dem Steuerkanal 28 ist in einer vorgebbaren Einschraubposition achssymmetrisch zu einer der Mittenachsen der Spannvorrichtung, sofern die beiden Steuerkolben 22,24 zu dieser angesprochenen Achse den gleichen axialen Abstand einhalten. Dank dieses symmetrischen Aufbaus ist somit dem Unwuchtverhalten bei der rotierenden Bearbeitung wirksam begegnet. In Blickrichtung auf die Fig.2 gesehen mündet der Steuerkanal 28 über eine Mittenbohrung 44 in das Innere des Aufnahmeraumes 16, wobei sich diese Mittenbohrung 44 längs einer vertikalen Mittenebene der Spannvorrichtung erstreckt und in Verlängerung über den Steuerkanal 28 hinaus in eine Zuführeinrichtung 46 endet, über die das hydraulische Medium zuführbar oder austauschbar ist.

Die der Welle zugewandte innere Spannwand 18 ist über zwei Schweißverbindungen 48 (Fig.1) mit der sonstigen Spannvorrichtung fest verbunden. Ferner ist die innere Spannwand 18, die einen Hohlzylinder ausbildet, von der Wandstärke her dünner ausgelegt als die sie umfassende Spannwand 20, die ebenfalls eine Art Hohlzylinder darstellt. Durch Ein- und Ausschrauben des jeweiligen Steuerkolbens erhöht bzw. erniedrigt man den Druck des weitgehend inkompressiblen hydraulischen Mediums im Aufnahmeraum 16 und verändert entsprechend die jeweilige Spann- oder Klemmkraft der beiden Spannteile in Form der Spannwände 18,20. Unabhängig davon, welcher Steuerkolben 22 oder 24 von der Bedienperson in den Steuerkanal 28 eingeschraubt wird, erhöht sich der Druck im Aufnahmeraum 16 und aufgrund der geringeren Wandstärke der Spannwand 18 gegenüber der Spannwand 20 aus demselben Material, vorzugsweise in Form eines Stahlmaterials, findet der Klemmvorgang der Spannvorrichtung auf der Welle statt, wobei sich der Innendurchmesser der Spannwand 18 entsprechend verringert und der Außendurchmesser der Spannwand 20 zunächt im wesentlichen gleich bleibt. Der angesprochene Einschraubvorgang findet solange statt, bis der wahllos eingedrehte Steuerkolben 22 oder 24 mit seinem Einschraubteil 34 am vorderen Anschlag 30 anliegt. Bei der dahingehenden Einschraubsituation ist dann der Maximaldruck bzw. die maximale Klemmkraft für die innere Spannwand 18 erreicht und die Spannvorrichtung definitiv auf der Welle festgelegt.

Durch Betätigen des jeweils anderen Steuerkolbens 24 bzw. 22 kommt es zu einer Überlagerung der Druck- oder Klemmkräfte und die äußere Spannwand 20 wird aufgeweitet, so daß ein aufgeschobenes Bearbeitungswerkzeug, beispielsweise in Form eines Holzfräsers, über den Außenumfang der Spannvorrichtung festgespannt ist. Vorzugsweise liegt dabei zum Erreichen einer axialen Abstützung das Bearbeitungswerkzeug stirnseitig an der hierfür vorgesehenen Anlagefläche des Ringbundes 12 an. Die Klemmkraft wird dann so lange über den weiteren Steuerkolben erhöht, bis das Werkzeug sicher festgelegt ist oder der weitere Anschlag 30 erreicht ist. Zum Lösen der dahingehenden, in zeitlicher Abfolge hintereinander erstellten beiden Klemmverbindungen ist dann nur einer der Steuerkolben 22 oder 24 auszuschrauben, wobei dann zunächst das Werkzeug und anschließend die Spannvorrichtung auf der Welle freigegeben ist.

Ist hingegen zunächst ein Spannvorgang über den Außenumfang der Spannvorrichtung, also über die Spannwand 20, gewünscht, ist diese in der Wandstärke dünnwandiger auszulegen als die korrespondierende Wandstärke der inneren Spannhülse in Form der hohlzylindrischen Spannwand 18. Gegebenenfalls können auch beide Wandstärken sowohl von Spannwand 18 als auch von Spannwand 20 gleich ausgebildet sein und man wählt für die jeweilige Spannwand je nach gewünschtem Aufdehnverhalten einen anderen Werkstoff mit voneinander verschiedenen Elastizitätsmodulen aus, so daß über die entsprechende Werkstoffauswahl der gewünschte Dehn- oder Spannvorgang stattfindet. Ein am freien Ende der Spannwand 18 angebrachtes Außengewinde 50 kann dafür vorgesehen sein, in axialer Richtung ein weiteres Werkzeug (nicht dargestellt) festzulegen oder dient der Aufnahme von Distanzringen od.dgl..

Die nachfolgenden Ausführungsformen werden nur noch insofern erläutert, als sie sich wesentlich von der bisher beschriebenen Ausführungsform unterscheiden, wobei dieselben Bauteile mit denselben Bezugsziffern, aber um jeweils 100 erhöht bezeichnet sind. Die zu der ersten Ausführungsform dargelegten Erläuterungen gelten insoweit auch für die nachfolgend beschriebenen Ausführungsformen.

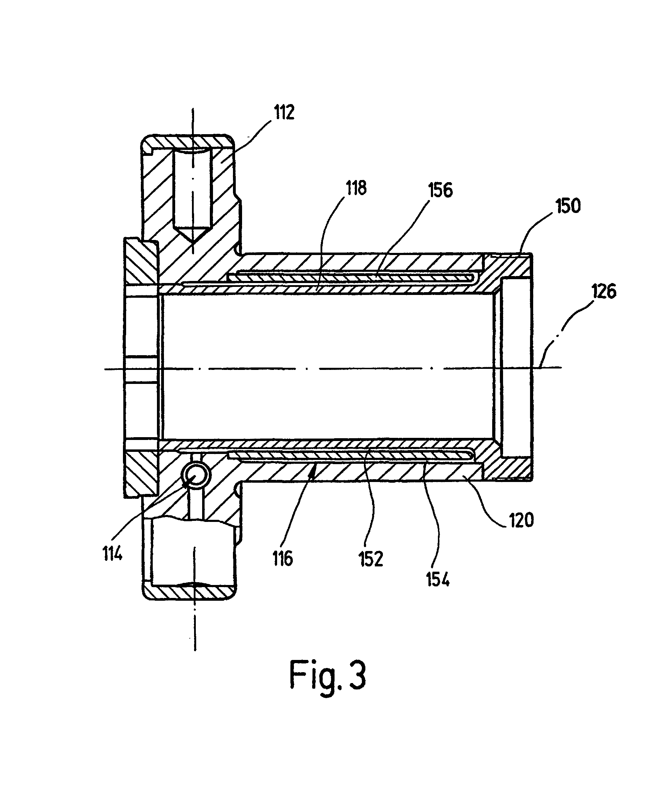

Bei der Ausführungsform einer Spannvorrichtung nach der Fig.3 ist der Aufnahmeraum 116 in einen inneren Aufnahmeraum 152 und einen äußeren Aufnahmeraum 154 unterteilt, wobei die beiden Teilräume 152,154 fluidführend miteinander verbunden, ansonsten aber durch einen Hohlzylinder 156 räumlich voneinander getrennt sind. Im Ausgangszustand herrscht mithin in beiden Räumen 152,154 derselbe Druck, wobei sich die jeweilige elastische Verformung, die aufgrund der Druckänderung des hydraulischen Mediums erzeugt wird, über den Hohlzylinder 156 beeinflussen läßt und wobei wiederum eine geeignete Materialauswahl mit das Verformverhalten bestimmt. Durch die Verwendung des Hohlzylinders 156 im Aufnahmeraum 116 lassen sich größere Durchmesserunterschiede zwischen Welle und Werkzeug überwinden, ohne daß das Volumen des Aufnahmeraums 116 zu groß wird, was insbeondere bei Temperaturschwankungen zu Problemen infolge der Temperaturabhängigkeit des eingeschlossenen Volumens des hydraulischen Mediums führen könnte.

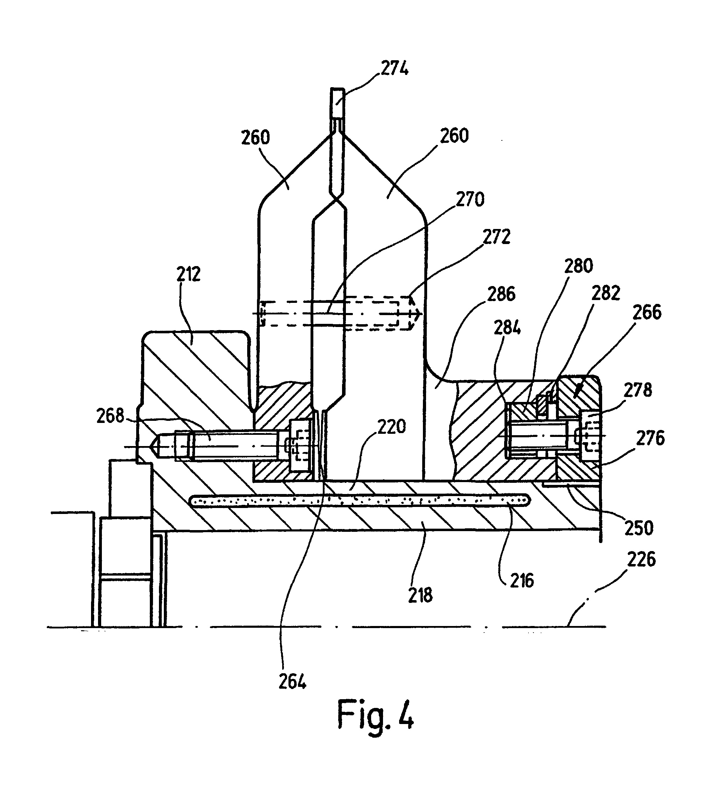

Die Ausführungsform einer Spannvorrichtung nach der Fig.4 dient der Aufnahme zweier Werkzeugträger 260, die entgegen der Wirkung eines Kraftspeichers in Form einer Druckfeder 264 über eine als Ganzes mit 266 bezeichnete Einstelleinrichtung längsverschiebbar auf den Spannteilen, insbesondere auf der äußeren Spannwand 220, anordenbar und in ihrer eingestellten Lage zueinander festlegbar sind. Dabei ist in Blickrichtung auf die Fig.4 gesehen der linke Werkzeugträger 260 über Längsverschraubungen 268 fest mit dem Ringbund 212 und der andere Werkzeugträger 260 in angrenzender Anlage mit der Einstelleinrichtung 266 verbunden, wobei beide Werkzeugträger 260 gegen eine relative Drehbewegung zueinander über Drehsicherungsstifte 270 gesichert sind, die an einem Werkzeugträger 260 fest angeordnet in zugeordnete Ausnehmungen 272 im gegenüberliegenden Werkzeugträger 260 eingreifen. Die dahingehenden Drehsicherungsstifte 270 sind vorzugsweise als Paßstifte innerhalb des einen Werkzeugträgers 260 festgelegt.

Jeder der beiden Werkzeugträger 260 weist außenumfangsseitig einzelne Werkzeugschneiden 274 auf, die vorgebbare radiale Abstände zueinander derart einnehmen, daß eine Werkzeugschneide 274 des einen Werkzeugträgers 260 in einen freigelassenen Abstand zwischen zwei Werkzeugschneiden 274 des anderen Werkzeugträgers 260 eingreifen kann. Die Schneidengeometrie der Werkzeugschneiden 274 ist dabei derart gewählt, daß eine Breitenanpassung erfolgen kann, um unterschiedliche Spanbreiten beispielsweise in Form unterschiedlicher Nutbreiten bei der Bearbeitung od.dgl. zu erreichen. Die Einstelleinrichtung 266 weist einen Einstellring 276 auf, der mit einem Innengewinde versehen in Eingriff ist mit dem Außengewinde 250 der Spannvorrichtung. Ferner kann der Einstellring 276 mit einer Einstellskala (nicht dargestellt) an der Spannvorrichtung zusammenwirken, um ein Maß für die Breiteneinstellung der Werkzeugschneiden 274 zu erreichen. Der Einstellring 276 wird stirnseitig von Führungsschrauben 278 durchgriffen, die in Aufnahmebuchsen 280 enden, die über einen Sprengring 282 gesichert innerhalb einer Ringausnehmung 284 in einem Radialfortsatz 286 des einen Werkzeugträgers 260 eingreifen. Sofern es sich bei dem Außengewinde 250 um ein Feingewinde handelt, läßt sich eine besonders genaue Einstellung der gewünschten Breite an den Werkzeugschneiden 274 einstellen.

Bei der vorliegenden Ausführungsform nach der Fig.4 ist darüber hinaus die Spannwand 218 einstückig mit der Spannwand 220 verbunden; jedoch mit einer anderen Wandstärke versehen, wobei der Aufnahmeraum 216 wiederum von den Spannwänden 218,220 nach innen und außen hin begrenzt ist. Je nach Wahl des Elastizitätsverhaltens der Spannwände 218,220 läßt sich widerum zunächst ein definierter Festlege-Lösevorgang an der Welle oder für die beiden Werkzeugträger 260 erreichen. So läßt sich beispielsweise die Spannvorrichtung mit den beiden Werkzeugträgern 260 zusammen von der Welle abnehmen, um in einer Einrichtstation od.dgl. gerüstet oder nachbearbeitet zu werden. Für einen Breiteneinstellvorgang an den Werkzeugschneiden 274 ist jedenfalls über die Betätigungseinrichtung 214 der Druck im Aufnahmerum 216 derart zu reduzieren, daß die Spannwand 220 im Elastizitätsverhalten nachgibt und eine Längseinstellbewegung des in Blickrichtung auf die Fig.4 gesehen rechten Werkzeugträgers 260 über die Einstelleinrichtung 266 erlaubt.

## Patentansprüche

1. Spannvorrichtung zum Befestigen eines Werkzeuges auf einer Welle, wobei zwischen der Welle und der Spannvorrichtung sowie zwischen dieser und dem Werkzeug jeweils eine Klemmverbindung infolge einer elastischen Verformung von Spannteilen, die zwischen sich einen Aufnahmeraum (16; 116; 216) für ein hydraulisches Medium begrenzen unter einer Klemmkraft ausgeübt durch das hydraulische Medium zustande kommt, das von einer Betätigungseinrichtung (14; 114; 214) mittels eines in Richtung einer Begrenzung verfahrbaren Ansteuerelements ansteuerbar ist, wobei die Betätigungseinrichtung (14; 114; 214) ein weiteres Ansteuerelement aufweist und wobei die Ansteuerelemente getrennt voneinander betätigbar sind, **dadurch gekennzeichnet, daß** das eine Ansteuerelement bei Erreichen der Begrenzung unter einer vorgebbaren maximalen Klemmkraft die eine Klemmverbindung herstellt und daß aufgrund des unterschiedlichen Elastizitätsverhaltens der Spannteile (18, 20; 118, 120; 218, 220) bedingt durch unterschiedliche Wandstärken und/oder Elasizitätsmodule dieser Klemmkraft zeitlich nachfolgend eine weitere Klemmkraft für die zweite Klemmverbindung durch das weitere Ansteuerelement überlagert ist.

2. Spannvorrichtung nach Anspruch 1, **dadurch gekennzeichnet, daß** das jeweilige Ansteuerelement einen Steuerkolben (22,24) aufweist, der als Begrenzung gegen einen Anschlag (30) verfahrbar ist.

3. Spannvorrichtung nach Anspruch 1 oder 2, **dadurch gekennzeichnet, daß** die Spannteile aus konzentrisch zueinander angeordneten Spannwänden (18,20; 118, 120; 218, 220) bestehen.

4. Spannvorrichtung nach Anspruch 2 oder 3, **dadurch gekennzeichnet, daß** die Steuerkolben (22, 24) in einem Ringbund (12, 112; 212) angeordnet sind und in ihrer Wirkrichtung quer zur Längsachse (26; 126; 226) der Spannvorrichtung in einem gemeinsamen Steuerkanal (28) verlaufen, der in den Aufnahmeraum (16; 116; 216) mündet.

5. Spannvorrichtung nach Anspruch 4, **dadurch gekennzeichnet, daß** die Steuerkolben (22, 24) innerhalb des gemeinsamen Steuerkanal (28) bis zum jeweiligen Anschlag (30, 32) einschaubbar und ausschraubbar sind.

6. Spannvorrichtung nach einem der Ansprüche 2 bis 5, **dadurch gekennzeichnet, daß** der jeweilige Steuerkolben (22, 24) mehrteilig ausgebildet ist mit einem Einschraubteil (34), einem Zwischenteil (36) und einem Abdichtteil (38).

## Claims

1. A tensioning device for the fitting of a tool onto a shaft, whereby one each of a clamp connection created through an elastic distortion of tensioning components that restrict a receiving space (16; 116; 216) for a hydraulic medium between themselves is created between the shaft and the tensioning device as well as between the said device and the tool with the aid of a clamping force that is created by the hydraulic medium, and which is controllable by an activating device (14; 114; 214) via a control element that can be driven in the direction of a limiter, whereby the activating device (14; 114; 214) includes a further control element, and whereby the control elements can be activated separately from one another, **characterised in that** one of the control elements creates a clamp connection with the aid of a predeterminable maximal clamping force upon reaching of the limiter, and **in that** this clamping force is subsequently superseded by a further clamping force for the second clamp connection by the further control element due to the varying elasticity characteristics of the tensioning components (18, 20; 118, 120; 218, 220) arising from their varying wall thicknesses and/or elasticity modules.

2. A tensioning device according to claim 1, **characterised in that** the relevant control element includes a control piston (22, 24) which is moveable and whose path is limited by a stop (30).

3. A tensioning device according to claim 1 or 2, **characterised in that** the tensioning components consist of tensioning walls (18, 20; 118, 120; 218, 220) that are concentrically positioned relative to one another.

4. A tensioning device according to claim 2 or 3, **characterised in that** the control pistons (22, 24) are positioned within a circular band (12, 112; 212) and **in that** their operating direction is positioned across the longitudal axle (26; 126; 226) of the tensioning device within a common control channel (28) which connects onto the receiving space (16; 116; 216).

5. A tensioning device according to claim 4, **characterised in that** the control pistons (22, 24) can be threadingly affixed and threadingly disconnected within the common control channel (28) up to their relevant stop (30, 32).

6. A tensioning device according to one of the preceding claims 2 to 5, **characterised in that** the relevant control piston (22, 24) consists of a number of components including a threaded member (34), an interim member (36) and a sealing member (38).

## Revendications

1. Dispositif de serrage pour la fixation d'un outil sur un arbre, moyennant quoi un accouplement de serrage respectivement entre l'arbre et le dispositif de serrage ainsi qu'entre ce dernier et l'outil, dû à une déformation souple de pièces de serrage, lesquelles délimitent entre elles un espace de logement (16 ; 116 ; 216) pour un fluide hydraulique, est réalisé sous l'exercice d'une force de serrage par le fluide hydraulique, lequel peut être amorcé à l'aide d'un élément d'amorçage déplaçable en direction d'une butée de délimitation à l'aide d'un dispositif de commande d'amorçage (14 ; 114 ; 214), moyennant quoi le dispositif de commande d'amorçage (14 ; 114 ; 214) présente un autre élément d'amorçage et moyennant quoi les éléments d'amorçage peuvent être actionnés indépendamment les uns des autres, **caractérisé en ce que** l'un des éléments d'amorçage, lorsqu'il atteint la butée de délimitation sous l'effet d'un effort de serrage maximal prédéfini, forme l'un des accouplements de serrage, et qu'en raison du comportement élastique différentié des pièces de serrage (18 ; 20 ; 118 ; 120 ; 218 ; 220) imputable aux différentes épaisseurs des parois et/ou modules d'élasticité de cet effort de serrage, dans un deuxième temps un autre effort de serrage pour le deuxième accouplement de serrage est superposé à l'aide de l'autre élément d'amorçage.

2. Dispositif de serrage selon la revendication 1, **caractérisé en ce que** chaque élément d'amorçage présente un piston pilote (22, 24), lequel est déplaçable contre une butée (30) en guise de délimitation.

3. Dispositif de serrage selon les revendications 1 ou 2, **caractérisé en ce que** les pièces de serrage se composent de parois de serrage (18, 20 ; 118, 120 ; 218, 220) disposées de manière concentrique les unes par rapport aux autres.

4. Dispositif de serrage selon l'une quelconque des revendications 2 ou 3, **caractérisé en ce que** les pistons pilotes (22, 24) sont aménagés dans un lien annulaire (12, 112 ; 212) et qu'ils s'étendent de par leur direction opérative, transversalement à l'axe longitudinal (26, 126 ; 226) du dispositif de serrage dans un canal de commande commun (28), lequel débouche dans l'espace de logement (16 ; 116 ; 216).

5. Dispositif de serrage selon la revendication 4, **caractérisé en ce que** les pistons pilotes (22, 24) peuvent être vissés et dévissés à l'intérieur du canal de commande commun (28) jusqu'aux butées (30, 32) respectives.

6. Dispositif de serrage selon l'une quelconque des revendications 2 à 5, **caractérisé en ce que** chaque piston pilote (22, 24) est formé de plusieurs pièces, à savoir une pièce pour visser (34), une pièce intermédiaire (36) et une pièce d'obturation (38).
